# EUROPEAN PATENT SPECIFICATION

(11) **EP 1 047 736 B1**
(45) Date of publication and mention of the grant of the patent: **24.12.2008**
(21) Application number: 99944699.0
(22) Date of filing: 08.09.1999
(51) Int. Cl.: C09C 3/04, B01J 2/20

(54) **GRANULAR PIGMENTS**
PIGMENTGRANULATE
PIGMENTS GRANULAIRES

(30) Priority: 08.09.1998 GB 9819591
(43) Date of publication of application: 02.11.2000
(73) Proprietor: Rockwood Pigments NA, Inc., Beltsville, MD 20705-1333 (US)
(72) Inventor: EMERY, Peter, Robin, Frampton Dorset DT2 9NE (GB); MCAULAY, Hugh, Joseph, Buckinghamshire MK18 1XF (GB); DUNCKER, Peter, Toronto, Ontario M8W 1Y8 (CA)
(74) Representative: Hucker, Charlotte Jane
(86) International application number: PCT/GB1999/002974
(87) International publication number: WO 2000/014163

(56) References cited:
- EP-A- 0 803 552
- WO-A-98/17731
- DE-A- 4 345 168
- DE-A- 19 708 167
- GB-A- 1 535 807

## Description

### Field of Invention

The present invention relates to the manufacture of pigment granules, for example iron oxide and chromium oxide pigments.

### Background

Metal oxides, such as iron oxides or chromium oxides, are used in the pigmentation of among other things, cement and concrete products (e.g. paving slabs and blocks), paints, plastics, toners and inks, chelants, catalysts, and also in a variety of magnetic, medical, and pharmaceutical applications. Such metal oxide pigments have traditionally been used in the form of a powder.

Powdered metal oxide pigments, such as iron oxide and chromium oxide pigments, are dusty, giving rise to health hazards and making storage and handling difficult. Also, the powders are not free flowing and so cannot readily be conveyed through pipes, which readily become blocked by the powder; furthermore the poor flowing properties of powders makes it hard to meter them using auger screws to ensure the correct proportion of pigment to base material (e.g. concrete).

Similar problems are known in other industries, e.g. in the animal feedstuff industry, and such problems have been solved to a substantial extent by granulating the product. It is readily apparent that such solutions can be applied to the field of pigments to solve the above problems. For example, it has been proposed in FR-A-2 450 273 to granulate carbon black pigment used in the pigmentation of paper and cement and concrete; here it should be understood that carbon black gives rise to an even greater dusting problem than iron oxides since the granule size of carbon black powders is much smaller than that of iron oxide powders but also carbon black suffers from an additional problem of floating on the base material, which makes incorporation into the base material difficult. According to FR-A-2 450 273, the twin problems of dusting and poor incorporation are solved by mixing carbon black with at least 30% water and optionally also a wetting or dispersing agent in an amount of 0.5 to 12 % and preferably 5 to 10% (based on the amount of the carbon black) and subjecting the resulting mixture to compression forces in a pearlising machine to form pearls or granules. Depending on the nature and operation of the pearlising machine, the compression forces can be substantial.

In contrast to FR-A-2 450 273, EP-B-0 268 645 requires that no compression forces are applied to pigments during the formation of pigment granules for use in colouring of concrete and cement. This may be achieved by an agglomeration technique, e.g. by means of rotating pan or drum granulising machines, which merely bring individual pigment particles into contact with each other in the presence of water and a binder (e.g. lignin sulphonate), whereupon the particles adhere to each other, i.e. they coalesce, to form the required granules. Alternatively pigment granules may be formed by spray drying a mixture of the pigment, water and a binder and commercially it is the spray drying method that is used. Both methods, however, require the presence of a considerable amount of binders to ensure that the pigment particles adhere to one another. If made by pan or drum pelletising machines, it may be necessary to dry the granules to a commercially acceptable water content below 4.2% water.

In US-4 277 288, it has been proposed to manufacture pigment granules by forming a fluidised bed of pigment powder and adding into the bed an organic liquid or wax as a binder to promote granulation. A surfactant is also added.

US 5 484 481 discloses a process for the granulation of pigments for use in dyeing cement and concrete involving compacting pigment powders in the presence of a binder to form flakes, breaking up the flakes and pelletising the ground flakes using known techniques, e.g. using rotating pans or drums, which would involve the application of water and a binder to the ground flakes.

However, the granulation of pigments must meet another criterion not required in other industries where pelletisation is common, e.g. the animal feed stuff industry, namely the requirement that any pigment granules must be capable of being readily dispersed in the base material to colour it uniformly since if they did not readily disperse, they would give rise to streaks or pockets of colour, which detract from the appearance of the final product. Thus granules should be able to be dispersed in the base material while at the same time should be sufficiently coherent and robust that they do not break down into powder again during storage or handling.

The manufactures of coatings (whether liquid or dry) require that pigments contain as few unnecessary additives as possible and it would therefore be desirable to be able to produce pigments with substantially reduced amounts of binders and, if possible, even to eliminate such additives.

It has generally been thought indispensable commercially to use one or more binders (other than water or other material that is or can be removed after the formation of the granule) in the manufacture of pigment granules to give the granules strength to resist being broken up into powder during handling and storage and to promote the dispersion of these granules in their end use.

It is an object of the present invention to manufacture pigment granules that both readily disperse in the base medium and also are robust and have a reduced liability to dusting, i.e. to being broken down into powder. It is a further object of the present invention to provide a process of manufacturing robust and readily dispersible pigment granules without the use of substantial quantities of binder.

### Disclosure of the Invention

According to the present invention, there is provided a process for the preparation of low dusting, free flowing pigment granules as defined in claim 1.

The action of forcing the dough-like mixture of pigment and water through a die during the extrusion process exerts a substantial compaction on the individual pigment particles, thereby increasing the strength of the granules.

Surfactants and/or binders may be added to the extrusion dough, although any binder used is preferably of the type that also has some surfactant properties. Suitable binders and/or surface active agents comprise at least one material selected from the group consisting of stearates, acetates, alkylphenols, cellulosics, lignins, acrylics, epoxies, urethanes, sulphates, phosphates, formaldehyde condensates, silicates, silanes, siloxanes, titanates, and mixtures thereof. Preferred examples of such materials include at least one material selected from the group consisting of lignin sulphonate, polyacrylates, a salt of naphthalene sulphonate formaldehyde condensate which contains polycarboxylate, a salt of rosin size, a salt of disproportionated rosin, acetylenic diol on non-metallic oxide, sodium alkylbenzene sulphonate, nonyl phenol-ethylene oxide condensates, glycerol-based ethylene oxide-propylene oxide copolymers, and di-octyl sulphosuccinates. Examples of suitable binders/dispersants are Borresperse NA, Ultrazine NA, Pexol 2000, Dresinate 214, Dispex N40, Narlex LD31, Suparex DP CC002. Surfactants (e.g. anti-flocculants or wetting agents), such as sodium alkylbenzene sulphonates, provide some incidental binding action, as well as improving the dispersion properties in the end use.

The water content of the dough mixture is critical to:
- forming a stable granule
- preventing the extruded granules from fusing to one another
- producing discrete granules rather than just a long ribbon.
but the optimum water content can readily be determined for any pigment composition by simple trial and error.

The damp mixture is fed to a compression device whereby the mixture is forced through holes in a die, which is preferably a perforated plate or screen. This can be achieved by the action of a screw pushing the mixture through the die or by the action of a moving blade or a roller (or similar pushing device) wiped over the die and thereby compressing the mixture through the die.

Typically the extruder holes would be between 0.3 mm and 4 mm in diameter, but could be smaller or larger.

The extruded granules are dried (e.g. in a tray drier, band dryer, fluidised bed dryer etc) and may then be screened to remove fines and/or oversized granules, which latter can arise either because they are too long or because individual granules have fused together. Both the fines and the oversize can be recycled, although the latter could be mechanically reduced in size and rescreened.

The shape of the granules can be further enhanced by rounding either before or after drying, which would give them a higher impact strength (and therefore a reduced liability to form dust) and a greater ability to flow.

The granules can be obtained in very high yields (e.g. in excess of 95 %) and the process can easily be operated continuously and, if appropriate, automated.

The screened dried granules are relatively free of dust and fines, which is not the case with briquetted and spray dried granules. The extruded granules are low dusting, robust and exhibit good controllable flowability and handling properties.

The extruded granules of the present invention have greater impact strength than briquetted granules when made to have similar ability to be redispersed in the end use, e.g. in concrete. Looked at another way, the extruded granules having similar redispersion properties to briquetted granules have a greater impact strength. Thus, in general the redispersion properties and impact strength of the extruded granules are superior to spray dried granules.

The quantity of binder/surfactant used can be very low and indeed it is possible to dispense with such additives altogether, which is extremely advantageous for pigments used in wet or dry coatings industries (e.g. paints), where such additives are highly disadvantageous. This is a distinct advantage over spray dried and briquetted granules, where high levels of binders and/or surfactants are required.

The shear forces exerted and the mechanical energy input for the granule formation (and hence the compaction exerted on the pigment during granule formation) can be adjusted by:
- changing the extrusion hole size (the larger the diameter, the lower the shear)
- changing the extrusion speed, (e.g. the speed of the wiper blade/roller or the feed screw (the slower the speed, the lower the shear).

The compaction exerted on the pigment during granule formation brought about by the shear force and mechanical energy input during extrusion will determine the granules' redispersion and strength properties and hence by suitably setting these parameters during the manufacture of the extruded granules, the properties of the granules can be adjusted to match their intended end use. For example, in uses where redistribution is not a problem, high shear forces can be used during manufacture, which will mean that the granules will have high impact strengths and a low propensity to form dust during storage and handling. However, where easy redistribution properties are required, low shear forces should be used, but this will also make the granules less strong.

### Detailed Description of the Invention.

The invention will be illustrated by a number of non-limiting Examples. In the Examples, the percentages stated are by weight based on the weight of the pigment used.

In the present Examples, granules were subjected to various tests which were all conducted in the same manner:

### Yield Test

The granules were screened and the percentage of granules produced having a diameter in the range 0.5 - 2.4 mm was measured together with the percentage of oversized granules having a diameter greater than 2.4 mm.

### Flow Rate Test

The time taken for 100g of granules to flow through a funnel having a 15 mm diameter aperture from a static start was measured.

### Drop Strength

A sample of granules is sieved to remove fines (which are, except when specified otherwise, < 0.5 mm) and the granules were then dropped from a height of 750 mm onto a steel plate tilted at an angle of 45 degrees. The dropped sample is then sieved again and the fines (< 0.5 mm) generated by the drop are expressed as a percentage of the total sample weight. Hence the lower the fines generation figure, the higher the granule/granule impact strength.

### Colour shift (Delta E)

The colour shift displayed by a concrete brick made using the granular pigment as compared to a standard brick made using the original pigment powder was measured. The target Delta E should be less than 2.

### Bulk Density

The bulk density of granules is measured by taking a known volume of granules in a bottle and weighing the bottle. The weight of the bottle is subtracted and the bulk density can then be calculated expressed as g/cc.

### Dispersion Test

A weighed sample of material is stirred at a fixed rate in water for a fixed time, e.g. 3 grams in 225cc of water, stirred for 5 mins using a 50mm straight bladed turbine laboratory mixer at 1720 rpm (tip speed 4.5 m/s). The resulting slurry is then wet sieved through a 63 micron screen and the retained residue is dried, weighed and expressed as a percentage of the initial sample weight. The lower the residue figure, the more easily the material will disperse in the end use.

### Example 1

### Manufacture of extruded granules of iron oxide pigments.

A test rig was set up using a perforated plate with 4mm holes. Pigment paste was compressed through the holes using a hand roller with the extruded granules being collected in a tray beneath the perforated plate. These extruded granules were then dried in a laboratory oven.

The pigment paste was made by placing iron oxide pigment in a 0.5 litre tub and mixing it with soda ash to adjust the pH (0.8 % soda ash was used for yellow and red iron oxides and 0.4% for black iron oxide). The yellow iron oxide pigment was YB3100, the red RB2500 and the black BK5500.

Ultrazine NA (sodium lignosulphonate) was dissolved in a small quantity of water as a binder and surfactant. Some dispersant, Dispex N40 was also added to this water, which was then mixed in with the pigment. Further water was added until a malleable pigment dough was formed, which was suitable for extrusion.

### Yellow Iron Oxide

### Run 1 - Binder 2 % ; Dispersant 3 % ; Water 33 %

The paste had a tendency to produce stringy granules but generally extruded well. The granules surface was too wet and extruded strings readily re-fused back together again as a mass. The dried granules appeared extremely hard with a very shiny surface.

### Run 2 - Binder 0.75 % ; Dispersant 1.5 % ; Water 36 %

Paste still had a tendency to produce stringy granules and the extruded granules had a wet surface with some re-fusing occurring. Dried granules were hard.

### Run 3 - Binder 0.25 % ; Dispersant 0 % ; Water 40 %

Paste no longer produced stringy granules and the surface of the extruded granules was fairly dry. The dried granules seemed very soft.

Run 4 - Binder 0.75 % ; Dispersant 0.5 % ; Water 38 % Good dough, which extruded well. Dried granules looked stable and reasonably hard. Run 4 produced the most satisfactory result. The granules dispersed easily under the water tap.

Run 5 - Binder 0 % ; Dispersant 0.5 % ; Water 46 %. Good dough, which extruded well. Dried granules surface very rough and fractured. Although the granules held their shape well, they disintegrated fairly easily and were deemed too soft at the time.

### Black Iron Oxide

### - Binder 0.75 % : Dispersant 0.5 % ; Water 23 %

Granules looked very good.

### Red Iron Oxide

### - Binder 0.75 % ;Dispersant 0.5%;Water 20.5 %

Paste produced granules that were slightly stringy and the paste was difficult to compress through the extruder plate. Some surface wetness was evident on the granules. The granules looked hard, but they had a satin gloss finish.

The granules from the various runs were subjected to the following tests:

| Yellow granules | |
|---|---|
| Drop test (fines <1.18mm) | |
| Run 4 | 2.1 % - (showing good impact strength) |
| Run 5 | 5.8% |

| Dispersion Test | |
|---|---|
| Run 1 | 41 % |
| Run 2 | 30% |
| Run 3 | 30% |
| Run 4 | 30% |
| Run 5 | 6% |
| | |

| Black granules | |
|---|---|
| Dispersion Test | 63 % |
| | |

| Red granules | |
|---|---|
| Dispersion Test | 67 % |

It appears to be a relatively straightforward process to produce extruded iron oxide granules providing the level of additives (water, dispersant and binder) are optimised. The level of additives is low compared to granulation processes.

The level of water addition appears to be critical to achieve the right dough texture for extruding and hence obtain stable granules, minimise re-fusing of the extruded granules and provide discrete short granules rather than long strings but this can be optimised by simple trial and error.

### Example 2

Tests were conducted to produce extruded granules of iron oxide pigments of 2 mm diameter using a commercial basket extruder.

2.5 kgs each of yellow, red and black iron oxide (YB3IOO, RB2500 & BK5500 respectively) were mixed with soda ash for pH adjustment and then with water, Ultrazine NA (sodium lignosulphonate, as a binder) and Suparex DP CCOO2 (as a dispersant) in the amounts set out in Table 1. The resulting dough was extruded using a commercially available basket extruder obtainable form, e.g. Russell Finex Ltd to produce 2mm diameter granules. Table 1 also sets out the results of the tests conducted on those granules:

**TABLE 1**

| | **Yellow** | **Red** | **Black** |
|---|---|---|---|
| Water addition | 29 % | 17% | 18% |
| Ultrazine NA | *0.75* % | *1.0*% | *0.75 %* |
| Suparex | 0.5 % | 0.5 % | 0.5 % |
| Bulk density g/cc | 0.83 | 1.20 | 1.04 |
| Flow Test | 4.5 sec | 3.5 sec | 4 sec |
| Drop Test: | | | |
| Fines <0.5 mm | 1.2% | 1.3% | 1.5% |
| Fines <0.3 mm | 0.6 % | 0.7% | 0.8 % |
| Dispersion Test | 70 % | 70 % | 65 % |
| Colour Shift Delta E | | 6.36 | |

The 2mm extruded iron oxide granules produced on the basket extruder displayed good strength and flow properties but gave poor dispersion test results of well over the 50 % level. The latter problem was illustrated by a brick made with the red granules showing a large colour shift compared to the powder control brick with the Delta E well over the expected 2 limit: red spots were also visible in the brick.

### Example 3

A series of experiments were performed to optimise extruded granules of iron oxide pigments for their end use dispersion property.

The same test rig as used in Example 1 was set up but using a perforated plate with 3mm holes. Pigment paste was compressed through the holes using a hand roller with the extruded granules being collected in a tray beneath the perforated plate. These extruded granules were then dried in a laboratory oven.

Iron oxide powder (Yellow iron oxide YB3100; Red iron oxide RB2500; Black iron oxide BK5500) were mixed with soda ash to adjust pH.

Water and the following dispersants and wetting agents were used to form the extrusion dough in amounts set out in Table 2:

| Dispersants: | |
|---|---|
| Dispex N40 | (Dis) |
| Suparex DP CCOO2 | (Sup) |
| Narlex LD3 1 | (Nar) |

| Wetting agents: | |
|---|---|
| Ethylan BCP | (Et1) |
| Surfinol 104-S | (Sur) |
| Arylan SY30 | (Ary) |
| Ethylan BCD 42 | (Et2) |
| Lankropol K02 | (Lan) |

The granules were subjected to drop tests and dispersion tests and the results are given in Table 2, 3 and 4:

**TABLE 2**

| **YELLOW** | | | | |
|---|---|---|---|---|
| Additives | Water | Drop Test | | Dispersion |
| | | <1.18mm | <0.3mm | >0.63 mm |
| Nil | 42 % | 7.8% | 2.1% | 18% |
| | | | | |
| Dis 0.5% | 39% | 6.3 % | 1.6% | 20 % |
| Dis 0.75% | 39% | 5.3 % | 1.4% | 24% |
| Dis 1 % | 36% | 3.2 % | 0.8 % | 18 % |
| Dis 1 % | 37 % | 3.8 % | 0.9 % | 18% |
| Dis 1.25% | 37 % | 3.0% | 0.8 % | 26 % |
| Dis 1.5% | 35 % | 1.5% | 0.4% | 47 % |
| | | | | |
| Nar 0.8% | 39% | 4.1 % | 1.1% | 32 % |
| Nar 1.25% | 37% | 2.8 % | 0.7 % | 45 % |
| | | | | |
| Sup 0.25% | 41 % | 6.4% | 1.6% | 26 % |
| Sup 0.5% | 41 % | 4.0% | 1.1% | 21 % |
| Sup 0.75% | 39% | 4.9 % | 1.2% | 33 % |
| Sup 1 % | 38 % | 4.8 % | 1.1% | 37 % |
| | | | | |
| Sup 0.5% + Et1 0.025% | 40 % | 6.3 % | 1.5% | 30 % |
| Sup 0.5% + Sur 0.025% | 40 % | 4.3 % | 1.2% | 20 % |
| Sup 0.5% + Ary 0.025% | 41 % | 3.9 % | 1.0% | 11 % |
| Sup 0.5% + Et2 0.025% | 41 % | 3.4 % | 0.8 % | 16% |
| Sup 0.5% + Lan 0.025% | 41 % | 4.9 % | 1.0% | 17% |
| | | | | |
| Ary 0.025% | 43 % | 3.4 % | 0.8% | 6% |

**TABLE 3**

| **RED** | | | | |
|---|---|---|---|---|
| Additives | Water | Drop Test | | Dispersion |
| | | < 1.18mm | <0.3mm | >0.63 mm |
| Nil | 21 % | 10.6% | 3.1% | 40 % |
| | | | | |
| Nar 0.8% | 19% | 7.3 % | 1.9% | 55% |
| Sup 0.5% | 20 % | 6.3 % | 1.7% | 42 % |
| Sup 0.5% + Sur 0.025% | 20 % | 7.7 % | 2.3 % | 41 % |
| Sup 0.5% + Ary 0.025% | 21 % | 5.3 % | 1.6% | 40 % |
| Sup 0.5% + Et2 0.025% | 21 % | 5.2 % | 1.6% | 47 % |
| Sup 0.5% + Lan 0.025% | 21 % | 5.3 % | 1.6% | 48 % |
| Ary 0.025% | 21 % | 8.4% | 2.4% | 37% |

**TABLE 4**

| **BLACK** | | | | |
|---|---|---|---|---|
| Additives | Water | Drop Test | | Dispersion |
| | | < 1.18mm | <0.3mm | >0.63 mm |
| Nil | 23 % | 5.8% | 1.8% | 48 % |
| | | | | |
| Nar 0.8% | 21 % | 4.2 % | 1.2% | 53 % |
| Sup 0.5% | 21 % | 3.8 % | 1.1 % | 49 % |
| Sup 0.5% + Sur 0.025% | 22 % | 4.4% | 1.4% | 37% |
| Sup 0.5% + Ary 0.025% | 22 % | 5.3 % | 1.6% | 35 % |
| Sup 0.5% + Ary 0.025% | 22 % | 3.2 % | 1.0% | 32 % |
| Sup 0.5% + Ary 0.075% | 21 % | 5.5 % | 1.6% | 44 % |
| Sup 0.5% + Et2 0.025% | 22 % | 3.0 % | 1.0% | 42 % |
| Sup 0.5% + Lan 0.025% | 22 % | 4.1 % | 1.3% | 50 % |
| Ary 0.025% | 23 % | 6.8 % | 2.1 % | 31 % |
| Ary 0.250% | 23 % | 6.0 % | 1.8% | 42 % |

### Yellow

The yellow granules show an increase in strength and less favourable dispersion as the dispersant addition increases. However at 1% for Dispex and 0.5% for Suparex, the dispersion property improves close to the virgin granule dispersion, but the granule strength is greater. A small addition of wetting agent can improve the dispersion further as with 0.5 % Suparex plus 250 ppm Lankropol K02, Ethylan BCD 42 or Arylan SY30, the latter giving the best result.

250 ppm addition of Arylan SY30 alone was found to give the best all-round result for a 3mm granule with good granule strength and very good redispersion.

### Red

Less improvement achieved on the higher virgin dispersion result, although 0.5 % Suparex plus 250 ppm Arylan SY30 produced the same dispersion with a stronger granule. 250 ppm Arylan SY30 alone provided some redispersion improvement, but at the cost of some granule strength.

### Black

0.5% Suparex plus 250 ppm Arylan SY30 gave a definite improvement in redispersion with some improvement in granule strength, but increasing this Arylan level from 250 ppm to 750 ppm produced a less favourable dispersion result. There appears to be a definite optimum to the wetting agent addition level. Similarly 250 ppm Arylan alone gave a much improved dispersion result, which deteriorated at the 2500 ppm level.

### Example 4

Extruded granules of iron oxide pigments of 2 mm diameter were made using a commercial basket extruder and utilizing wetting agents to improve granule dispersion.

The same basket extruder was used as in Example 2.

2.5 kgs of yellow or 3.5 kgs of red or black iron oxide (YB3IOO, RB2500 & BK55OO respectively) were pre-mixed with soda ash for pH adjustment in a sigma blade mixer and water plus additives applied to give a compressible mixture suitable as a feed to the basket extruder. The extruded granules were dried in a fluidized bed dryer and bagged up for later analysis. The dispersant used was Suparex DP CCOO2 and the wetting agent was Arylan SY30. A second wetting agent Arylan 5BC25 was also examined on red and black granules. The results are given in Table 5:

**TABLE 5**

| | Water | Drop Test | Dispersion | Flow Test | B.D. |
|---|---|---|---|---|---|
| Additives | | <0.3mm | < 0.63mm | Sec | g/cc |
| **YELLOW** | | | | | |
| 0.5% Sup + 0.025%ArSY3O | 29 % | 0.8 % | 61 % | 3 - 3.5 | 0.84 |
| 0.5% Sup + 0.025%ArSY30 | 31 % | 0.4% | 59 % | 3.5 - 4 | 0.92 |
| 0.025% Arylan SY30 | 29 % | 0.5 % | 29 % | 4 | 0.91 |
| | | | | | |

| **RED** | | | | | |
|---|---|---|---|---|---|
| 0.5% Sup + 0.025%ArSY30 | 18 % | 1.0% | 61 % | - 3 sec | 1.25 |
| 0.025%Arylan SY30 | 18 % | 1.0% | 50 % | 3 sec | 1.27 |
| 0.025% ArylanSBC2S | 18 % | 2.2 % | 59 % | + 3 sec | 1.22 |
| | | | | | |

| **BLACK** | | | | | |
|---|---|---|---|---|---|
| 0.5% Sup + 0.025%ArSY30 | 20 % | 0.8 % | 48 % | 3.5 sec | 1.27 |
| 0.025%Arylan SY30 | 21 % | 0.5 % | 40 % | 3.5 sec | 1.31 |
| 0.025% ArylanSBC2S | 20% | 0.5 % | 45 % | 3 sec | 1.30 |

### Brick Delta E on the 0.025% Arylan SY3O samples

| | |
|---|---|
| Yellow | 1.34 |
| Red | 1.29 |
| Black | 1.63 |

The 2mm extruded iron oxide granules produced on the basket extruder using 250 ppm Arylan SY30 wetting agent displayed good strength and flow properties and showed a good improvement in their dispersion test results. This improvement was reflected in the brick colours which all exhibited a Delta E of less than 2 when compared to a powder control brick.

The basket extruder with 2mm holes had exerted more shear on the material than the hand test rig with 3 mm holes (Example 3). Hence for the same additives and additive levels there had been a decrease in the dispersion property and an increase in the granule strength.

### Example 5

Various alternative wetting agents were investigated in laboratory-produced 3 mm extruded iron oxide granules with regard to end use dispersion.

The same test rig as in Example 3 was used having a perforated plate with 3mm holes. Pigment paste was compressed through the holes using a hand roller with the extruded granules being collected in a tray beneath the perforated plate. The extruded granules were then dried in a laboratory oven.

Red or black iron oxide (RB2500 & BK55OO respectively) were mixed with soda ash for pH adjustment and water and wetting agents (in amounts set out in Table 6) applied to give a compressible mixture:
The wetting agents tried were:
   Monolan PC
   Ethylan GEO8
   Ethylan CPG660
   Arylan SBC2S
   Arylan SY30/Monolan PC mix (MaR)

The granules were tested for drop strength and dispersion and the results set out in Table 6:

**TABLE 6**

| | Water | Drop Test | | Dispersion |
|---|---|---|---|---|
| Additives | | <1.18mm | <0.3mm | >0.63mm |
| **BLACK** | | | | |
| 0.025% Monolan PC | 24 % | 8.2 % | 2.9% | 30 % |
| 0.1% Monolan PC | 22 % | 6.6 % | 2.4% | 45 % |
| 0.025% Ethylan GEO8 | 24 % | 9.2 % | 3.1 % | 36% |
| 0.1% Ethylan GEO8 | 23 % | 5.6% | 2.0% | 51 % |
| 0.025% Ethylan CPG66O | 24 % | 5.7% | 2.0% | 37 % |
| 0.1% Ethylan CPG660 | | 5.2 % | 2.0% | 44 % |
| 0.025% Arylan SBC2S | 24 % | 6.6 % | 2.4% | 35 % |
| 0.1% Arylan SBC2S | 23 % | 6.0% | 2.2 % | 58 % |
| 0.025%&0.025% MaR | 23 % | 5.2 % | 1.9% | 34% |
| 0.01%&0.01% MaR | 24 % | 5.5 % | 1.7% | 33 % |
| NIL | 23 % | 5.8 % | 1.8% | 48 % |
| 0.025% Arylan SY30 | 23 % | 6.8 % | 2.1 % | 31% |
| | | | | |

| **RED** | | | | |
|---|---|---|---|---|
| 0.025% Monolan PC | 25 % | 11.9% | 3.4 % | 34% |
| 0.01 %&0.01% MaR | 23 % | 12.7 % | 3.8 % | 35 % |
| NIL | 21 % | 10.6% | 3.1 % | 40 % |
| 0.025% Arylan SY30 | 21 % | 8.4% | 2.4% | 37 %) |

Monolan PC (a glycerol based ethylene oxide - propylene oxide co-polymer) at 250 ppm provided a similar dispersion performance in black iron oxide extruded granules as Arylan SY30 (a sodium alkylbenzene sulphonate). At 1000 ppm the dispersion performance was less favourable.

The Monolan PC provided some improvement in the red iron oxide extruded granules compared to Arylan SY30, but at the expense of some granule strength.

Monolan PC is a non-ionic surfactant whilst Arylan SY3O is anionic.

### Example 6

Drop tests and dispersion tests were conducted to compare extruded granules of iron oxide pigments made by the present invention with commercially available spray-dried and briquetted granule products. The bulk density of the granules was also measured.
SD = spray dried granules
BR = briquetted granules
EG = extruded granules

| **Yellow Iron Oxide** | | | | |
|---|---|---|---|---|
| | Granule | Dispersion | Drop fines | Bulk density |
| | Type | residue | <0.3 mm | g/cc |
| Silo 49 | SD | 74 % | 6.3 % | 0.88 |
| Bayer 920G | SD | 33 % | 5.4 % | 0.62 |
| Bayer 920C | BR | 16% | 2.9% | 0.79 |
| 4 mm granules with 0.75% UltrazNA | | | | |
| +0.5%DispX | EG | 30 % | | |
| 4 mm granules with 0.5%DispX | EG | 6% | | |
| 3 mm granules with no additives | EG | 18% | 2.1 % | |
| 3 mm granules with 0.5% SupX | | | | |
| +250ppm ArylanSY3O | EG | 11% | 1.0% | |
| 3 mm granules with 250ppm | | | | |
| Arylan SY3O | EG | 6% | 0.8 % | |
| 2 mm granules with 0.5% SupX | | | | |
| +25Oppm ArylanSY3O | EG | 60 % | 0.6% | 0.88 |
| 2 mm granules with 250ppm | | | | |
| ArylanSY3O | EG | 29 % | 0.5 % | 0.91 |

| **Red Iron Oxide** | | | | |
|---|---|---|---|---|
| | Granule | Dispersion | Drop fines | Bulk density |
| | Type | residue | <0.3 mm | g/cc |
| Silo 212 | SD | 53 %- frothy | 7.1 % | 1.22 |
| Bayer 110G | SD | 87% | | |
| Bayer 130C | BR | 3 1%-v.frothy | | |
| Bayer 130C | BR | 3 7%-v.frothy | | |
| Bayer 110C | BR | 3 8%-v.frothy | 2.7% | 1.16 |
| 3 mm granules with no additives | EG | 40 % | 3.1 % | |
| 3 mm granules with 0.5 % SupX | | | | |
| +2SOppm ArylanSY3O | EG | 40 % | 1.6% | |
| 3 mm granules with 250ppm | | | | |
| ArylanSY3O | EG | 37 % | 2.4% | |
| 3mm granules with 250 ppm | | | | |
| Monolan PC | EG | 34% | 3.4% | |
| 2 mm granules with 0.5% SupX | | | | |
| +250ppm Arylan SY3O | EG | 61 % | 1.0% | 1.25 |
| 2 mm granules with 250ppm | | | | |
| Arylan SY3O | EG | 50% | 1.0% | 1.27 |

| **Black Iron Oxide** | | | | |
|---|---|---|---|---|
| | Granule | Dispersion | Drop fines | Bulk density |
| | Type | residue | <0.3 mm | g/cc |
| Silo 77 | SD | 91 % | 14.4% | 1.20 |
| Bayer330G | SD | 72 % | | |
| Bayer330C | BR | 34%-v.frothy | 6.3 % | 1.23 |
| 3 mm granules with no additives | EG | 48 % | 1.8% | |
| 3 mm granules with 0.5 % SupX | | | | |
| + 250ppm Arylan SY30 | EG | 33 % | 1.3% | |
| 3 mm granules with 250ppm | | | | |
| Arylan SY30 | EG | 31 % | 2.1 % | |
| 3mm granules with 250 ppm | | | | |
| Monolan PC | EG | 30% | 2.9% | |
| 2 mm granules with 0.5 % SupX | | | | |
| +250ppm Arylan SY3O | EG | 48 % | 0.8 % | 1.27 |
| 2 mm granules with 250ppm | | | | |
| Arylan SY3O | EG | 40 % | 0.5 % | 1.31 |

Furthermore, while specific examples refer to binders and/or surfactants with the active agent as described, other binders and surfactants may also be anticipated within the scope of the invention; put more generally, the invention encompasses the use of binders and/or surfactants comprising at least one material selected from the group consisting of stearates, acetates, alkyphenols, cellulosics, lignins, acrylics, epoxies, urethanes, sulphates, phosphates, formaldehyde condensates, silicates, silanes, siloxanes, and titanates.

## Claims

1. A process for the preparation of low dusting, free flowing pigment granules, the pigment consisting of powdered iron oxides and/or chromium oxides, which process comprises
(i) mixing said powdered pigment with water, wherein said mixing forms a mixture having a dough-like consistency;
(ii) optionally adding to the mixture obtained in step (i) at least one of a binder and a surfactant;
(iii) extruding the mixture obtained in step (i)or step (ii) through at least one die, and thereby also compacting the mixture, to form extruded granules; and
(iv) drying the extruded granules, so that the final water content of the granules is less than 5% by weight.

2. A process as claimed in claim 1, wherein no binder or surfactant is added to the mixture.

3. A process as claimed in claim 1, wherein at least one of a binder and a surfactant is added to the mixture and the weight of the binder and/or surfactant is from 0.001 to 10% by weight based on the pigment.

4. A process as claimed in claim 3, wherein a binder having surfactant properties is added to the mixture.

5. A process as claimed in claim 3 or claim 4, wherein the binder and/or surface active agent comprises at least one material selected from the group consisting of stearates, acetates, alkylphenols, cellulosics, lignins, acrylics, epoxies, urethanes, sulphate, phosphates, formaldehyde condensates, silicates, silanes, siloxanes, titanates, or mixtures thereof.

6. A process as claimed in claim 3 or claim 4, wherein the binder and/or surface active agent comprises at least one material selected from the group consisting of lignin sulphonate, polyacrylates, a salt of naphthalene sulphonate formaldehyde condensate which contains polycarboxylate, a salt of rosin size, a salt of disproportionated rosin, acetylenic diol on non-metallic oxide, sodium alkylbenzene sulphonate, nonyl phenol-ethylene oxide condensates, glycerol-based ethylene oxide-propylene oxide copolymers, and di-octyl sulphosuccinates.

7. A process as claimed in claim 6, wherein the binder and/or surface active agent comprises at least one material selected from the group consisting of lignin sulphonate, a salt of naphthalene sulphonate formaldehyde condensate which contains polycarboxylate, a salt of rosin size, a salt of disproportionated rosin, acetylenic diol on non-metallic oxide, sodium alkylbenzene sulphonate, nonyl phenol-ethylene oxide condensates, glycerol-based ethylene oxide-propylene oxide copolymers, and di-octyl sulphosuccinates.

8. A process as claimed in any preceding claim, wherein the extruded granules have a diameter in the range of 0.1 to 20 mm.

9. A process as claimed in claim 8, wherein the extruded granules have a diameter in the range of 0.2 to 10 mm.

10. A process as claimed in claim 9, wherein the extruded granules have a diameter in the range of 0.5 to 4 mm.

11. A process as claimed in any preceding claim, wherein the extruded granules are rounded by a further processing step before drying.

12. A process as claimed in any of claims 1 to 10, wherein the extruded granules are not rounded before drying.

13. A process as claimed in any preceding claim, wherein the dry extruded granules are screened to remove undersize and oversize fractions.

14. A process as claimed in claim 13, wherein the screened out undersize and oversize fractions are incorporated into the mixture and extruded again.

15. A process as claimed in claim 14, wherein the granules in the screened out oversize fraction are mechanically comminuted.

16. Compacted pigment granules obtainable by a process as claimed in any one of claims 1 to 15.

17. Use of compacted pigment granules as defined in claim 16, to colour cement or concrete.

## Patentansprüche

1. Verfahren zur Herstellung eines rieselfähigen Pigmentgranulats mit geringer Staubbildung, wobei das Pigment aus pulvrigen Eisenoxiden und/oder Chromoxiden besteht, wobei das Verfahren
(i) das Mischen des Pigmentpulvers mit Wasser, wobei die Mischung eine Mischung mit einer teigartigen Konsistenz bildet;
(ii) gegebenenfalls das Zugeben von einem Bindemittel und/oder einem Tensid zu der Mischung, die in Schritt (i) erhalten wird;
(iii) das Extrudieren der Mischung, die in Schritt (i) oder Schritt (ii) erhalten wird, durch mindestens eine Düse und **dadurch** auch das Kompaktieren der Mischung, um extrudiertes Granulat zu bilden; und
(iv) das Trocknen des extrudierten Granulats, so dass der Endwassergehalt des Granulats weniger als 5 Gew.-% beträgt;
umfasst.

2. Verfahren wie in Anspruch 1 beansprucht, worin kein Bindemittel oder Tensid zur Mischung zugegeben wird.

3. Verfahren wie in Anspruch 1 beansprucht, worin ein Bindemittel und/oder ein Tensid zur Mischung zugegeben wird und das Gewicht von dem Bindemittel und/oder dem Tensid 0,001 bis 10 Gew.-%, bezogen auf das Pigment, beträgt.

4. Verfahren wie in Anspruch 3 beansprucht, worin ein Bindemittel mit Tensideigenschaften zur Mischung zugegeben wird.

5. Verfahren wie in Anspruch 3 oder Anspruch 4 beansprucht, worin das Bindemittel und/oder das oberflächenaktive Mittel mindestens ein Material umfasst, das ausgewählt ist aus der Gruppe bestehend aus Stearaten, Acetaten, Alkyphenolen, Cellulosederivaten, Ligninen, Acrylpolymeren, Epoxiden, Urethanen, Sulfat, Phosphaten, Formaldehydkondensaten, Silicaten, Silanen, Siloxanen, Titanaten oder Mischungen davon.

6. Verfahren wie in Anspruch 3 oder Anspruch 4 beansprucht, worin das Bindemittel und/oder das oberflächenaktive Mittel mindestens ein Material umfasst, das ausgewählt ist aus der Gruppe bestehend aus Ligninsulfonat, Polyacrylaten, einem Salz von Naphthalinsulfonat-Formaldehyd-Kondensat, das Polycarboxylat enthält, einem Salz von Kolophoniumleim, einem Salz von disproportioniertem Kolophonium, Acetylendiol auf nicht-metallischem Oxid, Natriumalkylbenzolsulfonat, Nonylphenol-Ethylenoxid-Kondensaten, Ethylenoxid-Propylenoxid-Copolymeren auf Basis von Glycerin und Dioctylsulfosuccinaten.

7. Verfahren wie in Anspruch 6 beansprucht, worin das Bindemittel und/oder das oberflächenaktive Mittel mindestens ein Material umfasst, das ausgewählt ist aus der Gruppe bestehend aus Ligninsulfonat, einem Salz von Naphthalinsulfonat-Formaldehyd-Kondensat, das Polycarboxylat enthält, einem Salz von Kolophoniumleim, einem Salz von disproportioniertem Kolophonium, Acetylendiol auf nicht-metallischem Oxid, Natriumalkylbenzolsulfonat, Nonylphenol-Ethylenoxid-Kondensaten, Ethylenoxid-Propylenoxid-Copolymeren auf Basis von Glycerin und Dioctylsulfosuccinaten.

8. Verfahren wie in irgendeinem vorhergehenden Anspruch beansprucht, worin das extrudierte Granulat einen Durchmesser im Bereich von 0,1 bis 20 mm aufweist.

9. Verfahren wie in Anspruch 8 beansprucht, worin das extrudierte Granulat einen Durchmesser im Bereich von 0,2 bis 10 mm aufweist.

10. Verfahren wie in Anspruch 9 beansprucht, worin das extrudierte Granulat einen Durchmesser im Bereich von 0,5 bis 4 mm aufweist.

11. Verfahren wie in irgendeinem vorhergehenden Anspruch beansprucht, worin das extrudierte Granulat vor dem Trocknen durch einen weiteren Verarbeitungsschritt abgerundet wird.

12. Verfahren wie in irgendeinem der Ansprüche 1 bis 10 beansprucht, worin das extrudierte Granulat vor dem Trocknen nicht abgerundet wird.

13. Verfahren wie in irgendeinem vorhergehenden Anspruch beansprucht, worin das trockene extrudierte Granulat gesiebt wird, um Untergröße- und Übergröße-Fraktionen zu entfernen.

14. Verfahren wie in Anspruch 13 beansprucht, worin die ausgesiebten Untergröße- und Übergröße-Fraktionen wieder in die Mischung gegeben und extrudiert werden.

15. Verfahren wie in Anspruch 14 beansprucht, worin das Granulat in der ausgesiebten Übergröße-Fraktion mechanisch zerkleinert wird.

16. Kompaktiertes Pigmentgranulat, erhältlich nach einem Verfahren wie in irgendeinem der Ansprüche 1 bis 15 beansprucht.

17. Verwendung eines kompaktierten Pigmentgranulats wie in Anspruch 16 definiert, um Zement oder Beton zu färben.

## Revendications

1. Procédé de préparation de granulés de pigment, à écoulement libre, à faible taux de poussière, le pigment consistant en des oxydes de fer et/ou des oxydes de chrome pulvérulents, lequel procédé comprend :
(i) le mélange dudit pigment pulvérulent avec de l'eau, où ledit mélangeage forme un mélange ayant une consistance de type pâte ;
(ii) le cas échéant, l'addition au mélange obtenu à l'étape (i), d'au moins un liant et un tensioactif ;
(iii) l'extrusion du mélange obtenu à l'étape (i) ou (ii) par au moins une matrice, et ainsi, également compaction du mélange, pour former des granulés extrudés, et
(iv) le séchage des granulés extrudés de sorte que la teneur finale en eau des granulés soit inférieure à 5% en poids.

2. Procédé selon la revendication 1, dans lequel aucun liant, ni tensioactif n'est ajouté au mélange.

3. Procédé selon la revendication 1, dans lequel au moins un d'un liant et d'un tensioactif est ajouté au mélange et dans lequel le poids du liant et/ou du tensioactif se situe dans l'intervalle allant de 0,001 à 10% en poids sur base du pigment.

4. Procédé selon la revendication 3, dans lequel on ajoute au mélange, un liant ayant des propriétés tensioactives.

5. Procédé selon la revendication 3 ou 4, dans lequel le liant et/ou l'agent tensioactif comprend au moins un matériau choisi parmi le groupe consistant en les stéarates, acétates, alkylphénols, composés cellulosiques, lignines, composés acryliques, époxydes, uréthannes, sulfate, phosphates, condensats de formaldéhyde, silicates, silanes, siloxanes, titanates ou leurs mélanges.

6. Procédé selon la revendication 3 ou 4, dans lequel le liant et/ou l'agent tensioactif comprend au moins un matériau choisi parmi le groupe consistant en un sulfonate de lignine, des polyacrylates, un sel de condensat sulfonate de naphtalène-formaldéhyde, qui contient un polycarboxylate, un sel de colle de colophane, un sel de colophane dismutée, un diol acétylénique sur un oxyde non métallique, un alkylbenzènesulfonate de sodium, des condensats nonylphénol-oxyde d'éthylène, des copolymères oxyde d'éthylène-oxyde de propylène démarrés sur le glycérol, et des sulfosuccinates de dioctyle.

7. Procédé selon la revendication 6, dans lequel le liant et/ou l'agent tensioactif comprend au moins un matériau choisi parmi le groupe consistant en un sulfonate de lignine, un sel de condensat sulfonate de naphtalène-formaldéhyde, qui contient un polycarboxylate, un sel de colle de colophane, un sel de colophane dismutée, un diol acétylénique sur un oxyde non métallique, un alkylbenzènesulfonate de sodium, des condensats nonylphénol-oxyde d'éthylène, des copolymères oxyde d'éthylène-oxyde de propylène démarrés sur le glycérol, et des sulfosuccinates de dioctyle.

8. Procédé selon l'une quelconque des revendications précédentes, dans lequel les granulés extrudés ont un diamètre situé dans l'intervalle allant de 0,1 à 20 mm.

9. Procédé selon la revendication 8, dans lequel les granulés extrudés ont un diamètre situé dans l'intervalle allant de 0,2 à 10 mm.

10. Procédé selon la revendication 9, dans lequel les granulés extrudés ont un diamètre situé dans l'intervalle allant de 0,5 à 4 mm.

11. Procédé selon l'une quelconque des revendications précédentes, dans lequel les granulés extrudés sont arrondis par une autre étape de procédé, avant le séchage.

12. Procédé selon l'une quelconque des revendications 1 à 10, dans lequel les granulés extrudés ne sont pas arrondis avant le séchage.

13. Procédé selon l'une quelconque des revendications précédentes, dans lequel les granulés extrudés séchés sont criblés pour éliminer les fractions de plus petite taille et de plus grande taille.

14. Procédé selon la revendication 13, dans lequel les fractions de plus petite taille et de plus grande taille, éliminées par criblage, sont incorporées dans le mélange et extrudées à nouveau.

15. Procédé selon la revendication 14, dans lequel les granulés de la fraction criblée de plus grande taille sont broyés mécaniquement.

16. Granulés compactés de pigment, pouvant être obtenus par un procédé selon l'une quelconque des revendications 1 à 15.

17. Utilisation des granulés compactés de pigment tels que définis à la revendication 16, pour colorer du ciment ou du béton.
